(19) Europäisches Patentamt
European Patent Office
Office européen des brevets

(11) EP 1 686 208 A1

(12) EUROPEAN PATENT APPLICATION
published in accordance with Art. 158(3) EPC

(43) Date of publication:
02.08.2006 Bulletin 2006/31

(21) Application number: 04799696.2

(22) Date of filing: 09.11.2004

(51) Int Cl.:
*D04H 3/00* (2006.01)

(86) International application number:
PCT/JP2004/016915

(87) International publication number:
WO 2005/045115 (19.05.2005 Gazette 2005/20)

(84) Designated Contracting States:
AT BE BG CH CY CZ DE DK EE ES FI FR GB GR HU IE IS IT LI LU MC NL PL PT RO SE SI SK TR

(30) Priority: 10.11.2003 JP 2003379491
23.01.2004 JP 2004015400
23.01.2004 JP 2004015401
23.01.2004 JP 2004015402
23.01.2004 JP 2004015403
23.01.2004 JP 2004015404
23.01.2004 JP 2004015405
12.03.2004 JP 2004070292

(71) Applicant: TEIJIN LIMITED
Osaka-shi,
Osaka 541-0054 (JP)

(72) Inventors:
- SAKURAI, Hiroshi,
c/o Iwakuni Research Center
Iwakuni-shi, Yamaguchi 740-0014 (JP)
- BAN, Tetsuo,
c/o Iwakuni Research Center
Iwakuni-shi, Yamaguchi 740-0014 (JP)
- HIRATA, Masumi,
c/o Iwakuni Research Center
Iwakuni-shi, Yamaguchi 740-0014 (JP)
- SAWAKI, Toru,
c/o Iwakuni Research Center
Iwakuni-shi, Yamaguchi 740-0014 (JP)
- KITAHARA, Mai,
c/o Iwakuni Research Center
Iwakuni-shi, Yamaguchi 740-0014 (JP)
- NITTA, Hideaki,
c/o Iwakuni Research Center
Iwakuni-shi, Yamaguchi 740-0014 (JP)

(74) Representative: Hallybone, Huw George et al
Carpmaels and Ransford,
43-45 Bloomsbury Square
London WC1A 2RA (GB)

# (54) CARBON FIBER NONWOVEN FABRIC, AND PRODUCTION METHOD AND USE THEREOF

(57) A carbon fiber nonwoven fabric comprising an aggregate of carbon microfibers having a fiber diameter of 0.001 to 2 μm and a production method thereof are provided. The nonwoven fabric is useful as a substrate, precursor and material for a fuel cell electrode. The nonwoven fabric can be mixed with a resin to be used as a composite material and can carry metal to be used in a filter.

Fig. 1

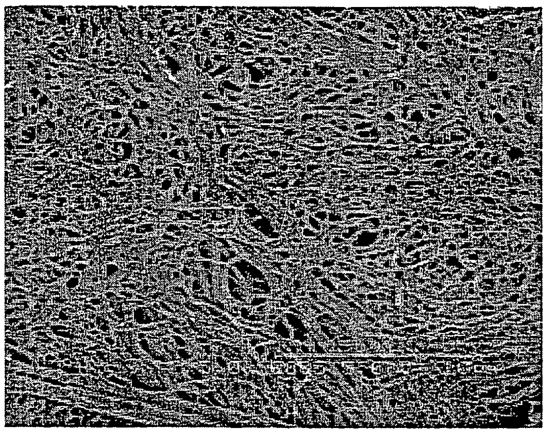

EP 1 686 208 A1

## Description

Technical Field

The present invention relates to a carbon fiber nonwoven fabric and a production method and use thereof. More specifically, it relates to a carbon fiber nonwoven fabric, a production method thereof, and use of the nonwoven fabric or a crushed material thereof for a precursor for fuel cell electrodes.

Background Art

A fuel cell comprises an electrolyte and electrodes as main constituent materials. The constituent material of the electrodes used in the fuel cell often has to provide a gas electrode with a place where the electrode initiate a cell reaction and, at the same time, serve as a collector. Thus, the constituent material must have adequate porosity and high mechanical strength, be a electron conductor impervious to gas and an electrolyte, and have water repellency for removing produced water. As such an electrode constituent material, a carbon material is predominantly used at present, and for example, a graphitized carbon fiber woven fabric is used. However, in the case of a carbon fiber woven fabric using graphitized polyacrylonitrile as a precursor, since its fiber diameter is generally large as about 10 to 20 μm, the fabric has a small specific surface area, a very few catalytically active spots and very low water repellency, so that the fabric must use polytetrafluoroethylene as a water repellent.
Further, woven and nonwoven fabrics comprising carbon fibers have also been used as impurity removing filters and electrode substrates for fuel cells. The porosity of fabrics such as woven and nonwoven fabrics comprising carbon fibers is an important factor that controls gas or liquid permeability, and an improvement in the permeability greatly influences the impurity removing filter or the generating efficiency of the fuel cell. For this reason, development of carbon materials having excellent gas or liquid permeability and high porosity has been desired. However, because the conventional woven fabric comprising carbon fibers using polyacrylonitrile as a precursor generally has a large fiber diameter of about 10 to 20 μm as described above, the porosity of the fabric remains around 50 to 80%, and it is difficult to produce a highly porous fabric comprising carbon fibers.
Further, in a secondary cell, particularly, in a secondary cell using lithium metal in the anode, dendritic crystals (dendrites) of lithium appear on the surface of the anode at the time of discharge and grow by charge-discharge cycles. The growth of the dendrites may not only degrade the cycle properties of the secondary cell but also, in the worst case, break through the separator provided to keep the cathode and the anode away from each other, electrically short with the cathode, catch fire and break the cell.
Consequently, in JP-A 62-90863 (the term "JP-A" as used herein means an "unexamined published Japanese patent application"), a secondary cell which uses a carbonaceous material such as coke as the anode and is used by doping and undoping alkali metal ions has been proposed.
It has been understood that the above problem of degradation of the anode in repetition of charge and discharge can be avoided by the above proposed secondary cell.
However, even in the above secondary cell, the anode is formed by mixing a powdery carbonaceous material with a binding material, adding a solvent to the mixture to form paste, applying or pressure-bonding the paste on a collector, and drying the paste. Since the secondary cell uses the binding material and the collector in addition to the carbonaceous material which is an anode active material, it cannot be said that the secondary cell has sufficiently high weight energy density as a cell. Thus, it has been proposed to use carbon fibers which do not have to use a collector and a binder since the carbon fibers themselves have high electroconductivity as the anode. However, it has been pointed out that the fibers become disheveled when assembled as a cell and are very difficult to handle.
Further, it is said that a specific surface area portion having a fine pore diameter of 2 nm or larger is associated with the capacitance of electric double layer capacitor. Further, it is considered that even in an aqueous solution based capacitor using a sulfuric acid aqueous solution as a solvent, a specific surface area portion of 2 nm or larger under performance at high current density and low temperature is associated with the capacitance. Accordingly, production of fibrous activated carbon having a fine pore diameter of 2 nm or larger has been desired.
As a method of solving the above problems, JP-A 8-119614 discloses a method of producing activated carbon in which mesopores having a fine pore diameter of 2 nm or larger have a specific surface area of 1,000 $m^2/g$ or larger by subjecting a carbonaceous raw material to water-vapor activation and then to alkali activation or by subjecting a carbonaceous raw material to carbonization, an oxidation treatment and alkali activation.
Further, on page 92, 2002 of the Summary of the 29th Carbon Society Annual Meeting, a method of producing activated carbon having developed mesopores by adding a rare earth metal complex to a carbon precursor such as pitch or a phenol resin and subjecting the precursor to water-vapor activation is disclosed.
However, since the activated carbons obtained by these methods are granular, they have problems of poor moldability and poor processability. Further, since the conventional fibrous activated carbon has a fiber diameter of 10

to 20 μm and a small apparent surface area as described above, a finer fiber diameter has been desired.

Meanwhile, metal-carrying fibers are useful as various functional materials such as a catalyst, an electrode material for a cell and an environment cleaning filter and are prepared by various techniques, and products thereof are widely distributed. Inter alia, water pollution caused by domestic wastewater and industrial wastewater and air pollution caused by harmful substances such as malodor in a living or working space and gas emissions from vehicles are serious problems in recent years, and development of a highly functional environment cleaning filter has been desired. As metal-carrying fibers used in such an environment cleaning filter, a photocatalyst-bound carbon fiber member having functions such as sterilization and deodorization is disclosed on page 2 of JP-A 2002-363858. This is obtained by immersing carbon fibers with an average fiber diameter of several microns in titania sol so as to disperse and bind titanium oxide on the surfaces. In addition, on page 2 of JP-A 2003-033666, a catalyst filter and an air cleaner prepared by immersing an inorganic fiber material such as glass, ceramic or metal in a metal soap solution and pulling it out of the solution so as to carry a catalytic substance such as gold, platinum or copper oxide are disclosed. However, since these use micron fibers, the specific surface area of the substrate is small. Accordingly, the specific surface area of the catalytic metal carried on the fibers is also small and active spots are few, so that it cannot be said that their functionality is satisfactory.

Under the circumstances, superfine fibers having a superfine average fiber diameter are under development and it has been attempted to use the superfine fibers as the above functional material in recent years. Such metal-carrying superfine fibers have a large specific surface area, small pressure loss and a slipflow effect of gas atoms. Therefore, when they are used as a substrate for a water or air cleaning filter, they are expected to exhibit higher performance than the conventional metal-carrying micron fibers. However, no effect of the superfine fibers has been confirmed, and a metal carrying technique for making effective use of the large specific surface area of the superfine fibers has not been established.

Further, fiber reinforced composite materials have been gradually receiving great attention because their mechanical properties such as strength, rigidity and tenacity in particular are superior to those of individual constituents thereof and other non-composite materials. Heretofore, resin compositions with desired electroconductivity which are prepared by adding carbon such as carbon black or carbon fibers to resins have been proposed. Inter alia, carbon fibers are used as fillers for high-performance composite materials because of their excellent properties such as high strength, a high elastic modulus, high electroconductivity and light weight. Use thereof is not limited to conventional reinforcing fillers intended to improve mechanical strength. Use thereof as electroconductive resin fillers for electromagnetic shielding materials and antistatic materials or as fillers for electrostatic coatings for resins by taking advantage of the high electroconductivity of the carbon material has been increasingly expected. Further, use thereof as field electron emission materials for flat displays and the like by taking advantage of chemical stability, thermal stability and a fine structure as the carbon material has been increasingly expected. In particular, since the composite materials formed of the carbon fibers has excellent strength and rigidity per unit weight, use thereof in the fields of aerospace engineering and sports goods has been rapidly increasing.

Under the circumstances, in recent years, it has been attempted to incorporate carbon nanotubes in place of conventional carbon black or carbon fibers to impart excellent electroconductivity, mechanical characteristic and sophisticated appearance to the composite materials. Japanese Patent No. 2,641,712 discloses a technique for incorporating carbon nanotubes into a resin, and Japanese Patent No. 3,034,027 discloses the form of carbon nanotubes in a resin composition. However, the carbon nanotubes form aggregates in a resin or exist in an entangled state, thereby causing problems such as nonuniformity in electroconductivity, deterioration in mechanical properties and deterioration in moldability. Further, widespread use of the carbon nanotubes is hampered because they are expensive.

Meanwhile, a method of producing pitch-based carbon fibers in accordance with a melt blow method so as to obtain a small carbon fiber diameter is known. Japanese Patent No. 2,640,183 discloses a method of obtaining fibrous pitch having a small diameter by discharging the pitch with gas ejected from a gas flowing pipe disposed around a pipe-shaped spinning pitch nozzle concentrically. Further, on pages 1 and 2 of JP-A 2000-8227, there is disclosed a method of obtaining fibrous pitch having a small diameter by allowing the pitch to contact gas ejected from gas ejection slits provided on both sides of a pitch discharge nozzle array. By these methods, carbon fibers having a smaller fiber diameter than conventional carbon fibers can be produced. However, the fiber diameter of the carbon fibers obtained by these methods is about 1 to 5 μm on the average, and it is substantially difficult to obtain a nonwoven fabric comprising finer superfine carbon fibers. Accordingly, a carbon fiber fabric having high porosity has not been obtained.

## Disclosure of the Invention

Therefore, an object of the present invention is to provide a nonwoven fabric comprising carbon microfibers which cannot be achieved by the prior art.

Another object of the present invention is to provide a method for producing the above nonwoven fabric of the present invention.

Still another object of the present invention is to provide a substrate, precursor and material for producing a

fuel cell electrode using the above nonwoven fabric of the present invention.

Still another object of the present invention is to provide a composite material using the above nonwoven fabric of the present invention.

Still another object of the present invention is to provide a metal-carrying nonwoven fabric using the above nonwoven fabric of the present invention and an air cleaning filter using the metal-carrying nonwoven fabric.

Other objects and advantages of the present invention will become apparent from the following description.

According to the present invention, firstly, the above objects and advantages of the present invention are achieved by a nonwoven fabric comprising an aggregate of carbon fibers having a fiber diameter of 0.001 to 2 μm.

According to the present invention, secondly, the above objects and advantages of the present invention are achieved by a method for producing a nonwoven fabric comprising an aggregate of carbon fibers, comprising:

(1) a step of forming an aggregate of precursor fibers from a mixture comprising 100 parts by weight of thermoplastic resin and 1 to 150 parts by weight of at least one thermoplastic carbon precursor selected from the group consisting of pitch, polyacrylonitrile, polycarbodiimide, polyimide, polybenzazol and aramid in accordance with a melt blow method,
(2) a step of forming an aggregate of stabilized precursor fibers by subjecting the above aggregate of precursor fibers to a stabilization treatment to stabilize the thermoplastic carbon precursor in the precursor fibers,
(3) a step of forming an aggregate of fibrous carbon precursor by removing the thermoplastic resin from the aggregate of stabilized precursor fibers, and
(4) a step of carbonizing or graphitizing the aggregate of fibrous carbon precursor.

According to the present invention, thirdly, the above objects and advantages of the present invention are achieved by a substrate for fuel cell electrodes which comprises the above nonwoven fabric of the present invention or a crushed material thereof.

According to the present invention, fourthly, the above objects and advantages of the present invention are achieved by a precursor for fuel cell electrodes which comprises the above nonwoven fabric of the present invention and in which a catalyst comprising carbon powder that carries platinum or a platinum alloy is bound by use of polytetrafluoroethylene as a binder.

According to the present invention, fifthly, the above objects and advantages of the present invention are achieved by an electrode material comprising a material obtained from crushing the above nonwoven fabric of the present invention.

According to the present invention, sixthly, the above objects and advantages of the present invention are achieved by a composite material comprising a matrix material and the above nonwoven fabric of the present invention or a crushed material thereof which is contained in the matrix material.

According to the present invention, seventhly, the above objects and advantages of the present invention are achieved by a metal-carrying nonwoven fabric or metal-carrying crushed material comprising 100 parts by weight of nonwoven fabric of the present invention which has a fiber diameter of 0.05 to 0.5 μm or a crushed material thereof and 0.1 to 100 parts by weight of metal compound carried on carbon fibers which constitute the nonwoven fabric or crushed material thereof.

## Brief Description of the Drawings

Fig. 1 is a drawing showing a photograph of the surface of a nonwoven fabric comprising carbon fibers obtained by the operation of Example 1 which has been taken by a scanning electron microscope ("S-2400" of Hitachi, Ltd., photographing magnification: 5,000x).
Fig. 2 is a schematic diagram showing a cross section of droplet when a water contact angle is measured in accordance with a drop method.
Fig. 3 is a diagram showing the amounts of trichloroethylene decomposed by titanium oxide carrying filters of Example 5 and Comparative Example 3 in evaluation of catalytic function.

## Best Mode for Carrying out the Invention

The nonwoven fabric of the present invention comprises an aggregate of carbon fibers having a fiber diameter of 0.001 to 2 μm, preferably 0.01 to 1 μm, more preferably 0.05 to 0.5 μm. When the fiber diameter of the carbon fibers is smaller than 0.001 μm, the nonwoven fabric has low mechanical strength and is difficult to handle disadvantageously, while when the fiber diameter is larger than 2 μm, the water contact angle becomes smaller than 140°, and for example,

when the nonwoven fabric is used as an electrode for a fuel cell, it is difficult to remove produced water disadvantageously.

The following relational expression (1) is preferably established between the fiber length (L) and fiber diameter (D) of the carbon fibers constituting the nonwoven fabric of the present invention.

$$30 < L/D \qquad (1)$$

When L/D is 30 or smaller, the nonwoven fabric has low mechanical strength or entanglements of the carbon fibers cannot be formed and the carbon fibers are not formed into a nonwoven fabric disadvantageously. L/D is preferably 50 or larger, more preferably 100 or larger.

Further, the density per unit area of the carbon fibers constituting the nonwoven fabric of the present invention is preferably 1 to 1,000 g/m$^2$, more preferably 2 to 500 g/m$^2$. When the density per unit area of the carbon fibers of the nonwoven fabric is lower than 1 g/m$^2$, the nonwoven fabric has low mechanical strength and is difficult to handle disadvantageously, while when it is higher than 1,000 g/m$^2$, porosity is significantly reduced, so that when the nonwoven fabric is used as, for example, an electrode substrate for a fuel cell, pores in the nonwoven fabric are densified and gas diffusion deteriorates disadvantageously.

Further, the porosity of the nonwoven fabric of the present invention is preferably 60 to 98%, more preferably 80 to 98%, much more preferably 90 to 98%.

When the porosity of the nonwoven fabric is lower than 60%, gas or liquid permeability significantly deteriorates disadvantageously, while when it is higher than 98%, the mechanical strength of the nonwoven fabric significantly deteriorates disadvantageously.

The porosity in the present invention refers to a value estimated by a mercury porosimeter and is a value calculated based on a mercury-free volume.

The nonwoven fabric of the present invention preferably has a water contact angle measured at 20°C and a relative humidity RH of 65 to 70% of 140 to 155°. When the water contact angle is smaller than 140°, it is comparable to or smaller than that of woven fabric, nonwoven fabric or paper comprising conventional carbon fibers. For example, when the present nonwoven fabric is used as an electrode for a fuel cell, it is difficult to remove produced water disadvantageously.

Meanwhile, when the water contact angle is larger than 155°, pores in the nonwoven fabric are densified and gas diffusion deteriorates disadvantageously, although produced water can be removed easily. The water contact angle measured at 20°C and a relative humidity (RH) of 65 to 70% is more preferably 145 to 155°.

Further, the nonwoven fabric of the present invention preferably has a thickness of 5 $\mu$m to 2 cm, more preferably 5 $\mu$m to 1 mm, much more preferably 10 to 500 $\mu$m. When the present nonwoven fabric with a thickness of smaller than 5 $\mu$m is used as, for example, an electrode material for a fuel cell, it has a problem of very low mechanical strength despite high gas diffusibility. Meanwhile, when the thickness is larger than 2 cm, the nonwoven fabric has a problem of deterioration in gas diffusibility despite sufficient mechanical strength.

It is preferred that the carbon fibers constituting the nonwoven fabric of the present invention not have a branch structure and that the carbon fibers be porous.

As described above, the nonwoven fabric of the present invention comprises (1) the step of forming an aggregate of precursor fibers, (2) the step of forming an aggregate of stabilized precursor fibers, (3) the step of forming an aggregate of fibrous carbon precursor, and (4) the carbonizing or graphitizing step. Hereinafter, these steps will be described in turn.

(1) Thermoplastic Resin

The thermoplastic resin used in the step (1) must be removed easily in the step (3) after production of the stabilized precursor fibers in the step (2). For this reason, it is preferable to use a thermoplastic resin which can be decomposed to 15 wt% or lower, more preferably 10 wt % or lower, much more preferably 5 wt% or lower of the initial weight when the resin is kept in an oxygen or inert gas atmosphere at a temperature of not lower than 350°C to lower than 600°C for 5 hours. As such a thermoplastic resin, polyolefins, polyacrylate-based polymers such as polymethacrylate and polymethyl methacrylate, polystyrenes, polycarbonates, polyarylates, polyester carbonates, polysulfones , polyimides , polyether imides and the like are preferably used. Of these, as a thermoplastic resin which has high gas permeability and can be thermally decomposed easily, a polyolefin-based thermoplastic resin represented by the following formula (I) or polyethylene is preferably used, for example.

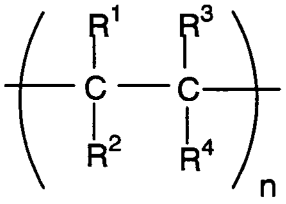

(I)

In the above formula, $R^1$, $R^2$, $R^3$ and $R^4$ each independently represent a hydrogen atom, an alkyl group having 1 to 15 carbon atoms, a cycloalkyl group having 5 to 10 carbon atoms, an aryl group having 6 to 12 carbon atoms or an aralkyl group having 6 to 12 carbon atoms, and n represents an integer of 20 or larger.

Specific examples of the compound represented by the above formula (I) include poly-4-methylpentene-1 , a copolymer of poly-4-methylpentene-1 such as a polymer resulting from copolymerizing a vinyl monomer with poly-4-methylpentene-1, and a polyethylene. Illustrative examples of the polyethylene include ethylene homopolymers and copolymers of ethylene and α-olefin such as a high-pressure-process low-density polyethylene, a medium-density polyethylene, a high-density polyethylene and a linear low-density polyethylene; and copolymers of ethylene and other vinyl monomer such as an ethylene-vinyl acetate copolymer.

Illustrative examples of α-olefin to be copolymerized with ethylene include propylene, 1-butene, 1-hexene and 1-octene. Illustrative examples of other vinyl monomer include vinyl esters such as vinyl acetate; and (meth)acrylic acids and alkyl esters thereof such as (meth)acrylic acid, methyl (meth)acrylate, ethyl (meth)acrylate and n-butyl (meth)acrylate.

Further, since the thermoplastic resin can be melt-kneaded with the thermoplastic carbon precursor easily, the glass transition temperature is preferably 250°C or lower when the thermoplastic resin is amorphous, and the crystalline melting point is preferably 300°C or lower when the thermoplastic resin is crystalline.

(2) Thermoplastic Carbon Precursor

Further, the thermoplastic carbon precursor used in the step (1) is preferably a thermoplastic carbon precursor which remains in an amount of at least 80 wt% of its initial weight when the precursor is kept at a temperature of 200°C to lower than 350°C for 2 to 30 hours and then at a temperature of 350°C to lower than 500°C for 5 hours in an oxygen atmosphere or oxygen/iodine mixed gas atmosphere. When the amount of the remaining precursor is smaller than 80% of the initial weight under the above conditions, carbon fibers cannot be obtained from the thermoplastic carbon precursor at a sufficient carbonization rate disadvantageously.

More preferably, the thermoplastic carbon precursor remains in an amount of at least 85 wt% of the initial weight under the above conditions. Specific examples of thermoplastic carbon precursors which satisfy the above conditions include pitch, polyacrylonitrile, polycarbodiimide, polyimide, polybenzazol, and aramid. Of these, pitch, polyacrylonitrile and polycarbodiimide are preferred, and pitch is more preferred.

Further, as the pitch, mesophase pitch expected to provide high strength and a high elastic modulus is generally preferred. The mesophase pitch refers to a compound that can form an optically anisotropic phase (liquid crystal phase) in a molten state. As a raw material for the mesophase pitch, coal or petroleum vinasse may be used or an organic compound may be used. However, from the viewpoint of ease of stabilization, carbonization or graphitization, mesophase pitch using an aromatic hydrocarbon such as naphthalene as a raw material is preferably used. The above thermoplastic carbon precursor can be used in an amount of 1 to 150 parts by weight, preferably 5 to 100 parts by weight, based on 100 parts by weight of the thermoplastic resin.

(3) Production of Mixture Comprising Thermoplastic Resin and Thermoplastic Carbon Precursor

The mixture used in the step (1) is produced from the thermoplastic resin and the thermoplastic carbon precursor. To produce carbon fibers having a fiber diameter of 2 μm or smaller from the mixture used in the present invention, the dispersion diameter of the thermoplastic carbon precursor into the thermoplastic resin is preferably 0.01 to 50 μm. When the dispersion diameter of the thermoplastic carbon precursor into the thermoplastic resin (I) is out of the range of 0.01 to 50 μm, it may be difficult to produce carbon fibers for a high-performance composite material. The dispersion diameter of the thermoplastic carbon precursor is more preferably 0.01 to 30 μm. Further, after the mixture comprising the thermoplastic resin and the thermoplastic carbon precursor is kept at 300°C for 3 minutes, the dispersion diameter of the thermoplastic carbon precursor into the thermoplastic resin is preferably 0.01 to 50 μm.

In general, when the mixture obtained by melt-kneading the thermoplastic resin and the thermoplastic carbon precursor is kept in a molten state, aggregation of the thermoplastic carbon precursor occurs with time. When the dispersion diameter exceeds 50 μm as a result of the aggregation of the thermoplastic carbon precursor, it may become

difficult to produce carbon fibers for a high-performance composite material. The aggregation rate of the thermoplastic carbon precursor varies according to the kinds of the thermoplastic resin and thermoplastic carbon precursor to be used. The thermoplastic carbon precursor preferably retains a dispersion diameter of 0.01 to 50 μm, more preferably at 300°C for at least 5 minutes, much more preferably at 300°C for at least 10 minutes. The thermoplastic carbon precursor in the mixture forms an island phase and shows a spherical or ellipsoidal shape. The dispersion diameter in the present invention refers to the diameter of the spherical thermoplastic carbon precursor in the mixture or the transverse diameter of the ellipsoidal thermoplastic carbon precursor in the mixture.

The thermoplastic carbon precursor is used in an amount of 1 to 150 parts by weight, preferably 5 to 100 parts by weight, based on 100 parts by weight of the thermoplastic resin. When the amount of the thermoplastic carbon precursor is larger than 150 parts by weight, a thermoplastic carbon precursor having a desired dispersion diameter cannot be obtained, while when the amount is smaller than 1 part by weight, there occurs, for example, a problem that the target carbon fibers cannot be produced at low cost, disadvantageously.

A method of producing the mixture from the thermoplastic resin and the thermoplastic carbon precursor is preferably kneading in a molten state. For melt-kneading of the thermoplastic resin and the thermoplastic carbon precursor, known means can be used as required. Illustrative examples of such means include a single-screw melt-kneading extruder, a twin-screw melt-kneading extruder, a mixing roll, and a Banbury mixer. Of these, a unidirectionally rotating twin-screw melt-kneading extruder is preferably used because it can achieve good microdispersion of the thermoplastic carbon precursor into the thermoplastic resin. The melt-kneading temperature is preferably 100°C to 400°C. When the melt-kneading temperature is lower than 100°C, the thermoplastic carbon precursor does not melt, thereby making microdispersion of the thermoplastic carbon precursor into the thermoplastic resin difficult disadvantageously. Meanwhile, when the melt-kneading temperature is higher than 400°C, decomposition of the thermoplastic resin and the thermoplastic carbon precursor proceeds disadvantageously. The melt-kneading temperature is more preferably 150°C to 350°C. The melt-kneading time is 0.5 to 20 minutes, preferably 1 to 15 minutes. When the melt-kneading time is shorter than 0.5 minutes, microdispersion of the thermoplastic carbon precursor is difficult disadvantageously. Meanwhile, when the melt-kneading time is longer than 20 minutes, productivity of the carbon fibers significantly deteriorates disadvantageously.

In the present invention, when the mixture is produced from the thermoplastic resin and the thermoplastic carbon precursor by melt-kneading, the materials are preferably melt-kneaded in a gas atmosphere having an oxygen gas content of lower than 10%. The thermoplastic carbon precursor used in the present invention denatures and becomes infusible at the time of melt-kneading by reacting with oxygen and may make its microdispersion into the thermoplastic resin difficult accordingly. Thus, melt-kneading is preferably carried out with inert gas circulated to reduce the oxygen gas content as much as possible. The oxygen gas content at the time of melt-kneading is more preferably 5% or lower, much more preferably 1% or lower. By carrying out the above method, the mixture comprising the thermoplastic resin and the thermoplastic carbon precursor for producing the nonwoven fabric comprising carbon fibers can be produced.

(4) Step (1)

In the present invention, an aggregate (nonwoven fabric) of precursor fibers is formed from the mixture obtained by melt-kneading the thermoplastic resin and the thermoplastic carbon precursor. The aggregate comprising precursor fibers can be produced by melt-blowing the mixture obtained by melt-kneading the thermoplastic resin and the thermoplastic carbon precursor.

As conditions for melt-blowing, a discharge die temperature of 150 to 400°C and a gas temperature of 150 to 400°C are suitably used. The gas blowing rate of melt-blowing influences the fiber diameter of the precursor fibers. The gas blowing rate is generally 2 , 000 to 100 m/s , more preferably 1,000 to 200 m/s . When the mixture of the thermoplastic resin and the thermoplastic carbon precursor is melt-kneaded and discharged from a die, it is preferred that the melt-kneaded mixture be passed through a pipe in a molten state and sent to the discharge die continuously, and transfer time from melt kneading to discharge from the spinneret is preferably within 10 minutes.

In the step (1), it is preferable to form precursor fibers having a fiber diameter of preferably 0.01 to 20 μm, more preferably 0.05 to 10 μm.

(5) Step (2)

In the step (2) in the production method of the present invention, a nonwoven fabric comprising stabilized precursor fibers is formed by subjecting the nonwoven fabric comprising precursor fibers prepared in the above step (1) to a stabilization treatment to stabilize the thermoplastic carbon precursor in the precursor fibers. Stabilization of the thermoplastic carbon precursor is a step necessary for obtaining a nonwoven fabric comprising carbonized or graphitized carbon fibers. When the subsequent step of removing the thermoplastic resin is carried out without the stabilization step, there occurs a problem such as thermal decomposition or fusion of the thermoplastic carbon precursor.

The stabilization can be carried out by a known method such as a treatment with the flow of gas such as oxygen or a treatment with a solution such as an acid aqueous solution. From the viewpoint of productivity, infusibilization in a gas flow is preferred. The gas component to be used is preferably a mixed gas comprising oxygen and/or a halogen gas in view of permeability to the above thermoplastic resin, adsorbability to the above thermoplastic carbon precursor and a fact that the gas can make the thermoplastic carbon precursor infusible quickly at low temperatures. Illustrative examples of the halogen gas include a fluorine gas, chlorine gas, bromine gas and iodine gas. Of these, the bromine gas and the iodine gas are preferred, and the iodine gas is particularly preferred. As a specific method of infusibilization in a gas flow, it is preferable to treat the thermoplastic carbon precursor in a desired gas atmosphere at 50 to 350°C, preferably 80 to 300°C, for 5 hours or less, preferably 2 hours or less.

Further, the softening point of the thermoplastic carbon precursor contained in the precursor fibers is significantly elevated by the above infusibilization. The softening point is preferably 40°C or higher, more preferably 500°C or higher, so as to obtain desired carbon microfibers. By carrying out the above method, the thermoplastic carbon precursor in the precursor fibers is stabilized, and an aggregate (nonwoven fabric) comprising the stabilized precursor fibers can be obtained.

(6) Step (3)

In the step in the production method of the present invention, the thermoplastic resin contained in the stabilized precursor fibers is removed by thermal decomposition. More specifically, the thermoplastic resin contained in the stabilized precursor fibers is removed, only a stabilized fibrous carbon precursor is separated, and a nonwoven fabric comprising the fibrous carbon precursor is formed. In this step, it is necessary to minimize the thermal decomposition of the fibrous carbon precursor, decompose and remove the thermoplastic resin, and separate a nonwoven fabric comprising only the fibrous carbon precursor.

The thermoplastic resin may be removed in either an oxygen-containing atmosphere or an inert gas atmosphere. When the thermoplastic resin is removed in the oxygen-containing atmosphere, it must be removed at a temperature of not lower than 350°C to lower than 600°C. The oxygen-containing atmosphere refers to a gas atmosphere having an oxygen concentration of 1 to 100% and may contain an inert gas such as carbon dioxide, nitrogen, argon, iodine or bromine in addition to oxygen. Of these conditions, air is particularly preferably used from the viewpoint of cost in particular.

When the temperature at which the thermoplastic resin contained in the nonwoven fabric comprising the stabilized precursor fibers is removed is lower than 350°C, the thermal decomposition of the fibrous carbon precursor can be inhibited but thermal decomposition of the thermoplastic resin cannot proceed to a sufficient extent disadvantageously. Meanwhile, when the temperature is 600°C or higher, the thermal decomposition of the thermoplastic resin can proceed to a sufficient extent but the thermal decomposition of the fibrous carbon precursor also occurs, resulting in a decrease in the carbonization yield of the nonwoven fabric comprising carbon fibers obtained from the thermoplastic carbon precursor disadvantageously.

The temperature at which the thermoplastic resin contained in the nonwoven fabric comprising the stabilized precursor fibers is decomposed is preferably 380 to 500°C in an oxygen atmosphere. It is particularly preferable to decompose the thermoplastic resin at 400 to 450°C for 0.5 to 10 hours. By the above process, the thermoplastic resin is decomposed to 15 wt% or lower of the initial weight used. Further, the thermoplastic carbon precursor remains in an amount of 80 wt% or higher of the initial weight used, as a nonwoven fabric comprising the fibrous carbon precursor.

Further, when the thermoplastic resin is removed in the inert gas atmosphere, it must be removed at a temperature of not lower than 350°C to lower than 600°C. The inert gas atmosphere refers to a carbon dioxide, nitrogen or argon gas having an oxygen concentration of 30 ppm or lower, more preferably 20 ppm or lower. The atmosphere may contain a halogen gas such as iodine or bromine.

Further, as inert gas used in this step, carbon dioxide and nitrogen can be preferably used from the viewpoint of cost. Nitrogen is particularly preferred. When the temperature at which the thermoplastic resin contained in the nonwoven fabric comprising the stabilized precursor fibers is removed is lower than 350°C, the thermal decomposition of the fibrous carbon precursor can be inhibited but thermal decomposition of the thermoplastic resin cannot proceed to a sufficient extent disadvantageously. Meanwhile, when the temperature is 600°C or higher, the thermal decomposition of the thermoplastic resin can proceed to a sufficient extent but the thermal decomposition of the fibrous carbon precursor also occurs, resulting in a decrease in the carbonization yield of the nonwoven fabric comprising carbon fibers obtained from the thermoplastic carbon precursor disadvantageously. The temperature at which the thermoplastic resin contained in the stabilized precursor fibers is decomposed is preferably 380 to 550°C in an inert gas atmosphere. It is particularly preferable to decompose the thermoplastic resin at 400 to 530°C for 0.5 to 10 hours. By the above process, the thermoplastic resin is decomposed to 15 wt% or lower of the initial weight of the thermoplastic resin used. Further, the thermoplastic carbon precursor remains in an amount of 80 wt% or higher of the initial weight of the thermoplastic carbon precursor used, as a nonwoven fabric comprising the fibrous carbon precursor.

Further, a method of removing the thermoplastic resin by a solvent may be employed as another method of

forming the nonwoven fabric comprising the fibrous carbon precursor by removing the thermoplastic resin from the nonwoven fabric comprising the stabilized precursor fibers. In this method, it is necessary to minimize dissolution of the fibrous carbon precursor into the solvent, decompose and remove the thermoplastic resin, and separate only the fibrous carbon precursor. To satisfy the conditions, it is preferable in the present invention to remove the thermoplastic resin contained in the fibrous carbon precursor by a solvent having a temperature of 30 to 300°C. When the temperature of the solvent is lower than 30°C, it takes a considerable amount of time to remove the thermoplastic resin contained in the precursor fibers. Meanwhile, when the temperature of the solvent is higher than 300°C, the thermoplastic resin can be removed in a short time, but the solvent dissolves the fibrous carbon precursor (I) as well and not only impairs the fiber structure and the structure of the nonwoven fabric but also lowers the carbonization yield on a raw material of carbon fibers to be obtained at the end disadvantageously. The temperature at which the thermoplastic resin is removed from the stabilized precursor fibers by the solvent is preferably 50 to 250°C, particularly preferably 80 to 200°C.

(7) Step (4)

In the step (4) in the production method of the present invention, the nonwoven fabric comprising the fibrous carbon precursor in which the thermoplastic resin has been removed to 15 wt% or lower of the initial weight is carbonized or graphitized in an inert gas atmosphere to produce carbon fibers. In the present invention, the nonwoven fabric comprising the fibrous carbon precursor is carbonized or graphitized by a high-temperature treatment in an inert gas atmosphere to turn into a nonwoven fabric comprising desired carbon fibers. The fiber diameter of the carbon fibers to be obtained is preferably 0.001 to 2 μm.

The nonwoven fabric comprising the fibrous carbon precursor may be carbonized or graphitized in accordance with a known method. The inert gas used may be nitrogen or argon, and the temperature is 500°C to 3,500°C, preferably 800°C to 3,000°C. Further, the oxygen concentration at the time of carbonization or graphitization is preferably 20 ppm or lower, more preferably 10 ppm or lower. By carrying out the above method, the nonwoven fabric comprising the carbon fibers can be produced.

Next, applications of the nonwoven fabric of the present invention will be described.

For the substrate for fuel cell electrodes according to the present invention, the nonwoven fabric of the present invention or a crushed material thereof is used.

The substrate for fuel cell electrodes according to the present invention has a significantly large water contact angle measured at 20°C and a relative humidity RH of 65 to 70% as compared with a nonwoven fabric, woven fabric or paper comprising conventional carbon fibers. Further, the present substrate has a significantly small carbon fiber diameter as compared with the nonwoven fabric, woven fabric or paper comprising conventional carbon fibers. Thus, in a case where the substrate is used as a material for a fuel cell electrode, since it is highly capable of removing produced water and increases a specific surface area, catalytically active spots increase and generating efficiency can be improved. The substrate for fuel cell electrodes according to the present invention preferably has a water contact angle measured at 20°C and a relative humidity RH of 65 to 70% of 140 to 155°. When the substrate is used as the nonwoven fabric, the thickness is preferably 5 to 5,000 μm, while when the crushed material is used as the substrate, the fiber diameter is preferably 0.1 to 50 μm.

The precursor for fuel cell electrodes according to the present invention is formed by binding a catalyst comprising carbon powder that carries platinum or a platinum alloy to the nonwoven fabric of the present invention by use of polytetrafluoroethylene as a binder. In this case, various types of carbon powders can be used as the carbon powder for carrying platinum or a platinum alloy. For example, carbon black known per se or a crushed material obtained from the nonwoven fabric of the present invention may be used.

In another embodiment, the precursor for fuel cell electrodes according to the present invention may be formed by binding a catalyst comprising platinum or a platinum alloy to the nonwoven fabric of the present invention by use of polytetrafluoroethylene as a binder. In another embodiment, the precursor for fuel cell electrodes according to the present invention may be formed by binding a catalyst comprising a crushed material obtained from the nonwoven fabric of the present invention, the material carrying platinum or a platinum alloy, to a carbon fiber fabric by use of polytetrafluoroethylene as a binder.

In the latter embodiment, the carbon fiber fabric may be a knit fabric or a nonwoven fabric, and the nonwoven fabric is not limited to the nonwoven fabric of the present invention.

The nonwoven fabric of the present invention and the crushed material thereof are also suitably used as an electrode material, particularly, an electrode material for a capantor and a secondary cell. A nonwoven fabric comprising porous carbon fibers and a crushed material thereof are preferable as an electrode material and are particularly preferable as an electrode material for a capantor.

Further, the electrode material of the present invention preferably has a water contact angle measured at 20°C and a relative humidity of 65 to 70% of 140 to 155°, the thickness of the nonwoven fabric comprising the carbon fibers is preferably 5 to 5,000 μm, the carbon fibers are preferably porous carbon fibers having fine pores on the surfaces,

and the diameter of the fine pores is more preferably 0.1 to 200 nm.

Further, the ratio of the specific surface area of fine pores having a diameter of 2 nm or larger to the total specific surface area is preferably 0.3 or higher. The total specific surface area is preferably 100 to 50,000 $m^2$/g.

The nonwoven fabric of the present invention as an electrode material is preferably produced by subjecting the fibrous carbon precursor obtained by conducting the steps (1), (2) and (3) in the production method of the present invention to a general activation treatment or activation carbon treatment such as a water-vapor activation treatment or an alkali activation treatment or a combination thereof.

The water-vapor activation method is a general granular activated carbon activation method and is carried out in the presence of water vapor at a temperature of 700°C to 1,500°C. A more preferable temperature range is 800°C to 1,300°C. The activation treatment time is preferably 3 to 180 minutes.

When the activation treatment time is shorter than 3 minutes, the specific surface area is significantly decreased disadvantageously. Meanwhile, when it is longer than 180 minutes, not only a decrease in productivity but also a significant reduction in carbonization yield occur disadvantageously.

In alkali activation, the raw material is impregnated with alkali hydroxide or alkaline carbonate and heated at a constant speed to a given temperature range to substitute it with activated carbon. Illustrative examples of activators used in the alkali activation include alkali metal hydroxides such as KOH and NaOH, and alkaline earth metal hydroxides such as $Ba(OH)_2$. Of these, KOH and NaOH are preferred. Conditions for the alkali activation vary according to an activator used. For example, when KOH is used, the raw material is preferably heated to 400 to 1,000°C, preferably 550 to 800°C.

The alkali activation treatment time may be selected as appropriate according to the heating rate and the treatment temperature. It is preferably 1 second to several hours, more preferably 1 second to 1 hour, at 550 to 800°C. The activator is generally used in the form of an aqueous solution, and the concentration thereof is about 0.1 to 90 wt%.

When the concentration of the activator solution is lower than 0.1 wt%, a nonwoven fabric with a large specific surface area cannot be produced disadvantageously, while when it is higher than 90 wt%, a nonwoven fabric with a large specific surface area cannot be produced and the carbonization yield is reduced disadvantageously. The concentration is more preferably 1 to 50 wt%.

The target nonwoven fabric can be obtained by impregnating the carbon fiber precursor with an alkali aqueous solution and heating it at a constant speed to a given temperature range. The nonwoven fabric obtained by the above method may contain alkalis or alkali salts. For this reason, the nonwoven fabric may be rinsed with water and dried after obtained.

By subjecting the carbon fiber precursor to the above water-vapor activation or alkali activation or a combination thereof, a nonwoven fabric having a fine pore diameter of 2 nm or larger and a fiber diameter of 500 nm or smaller can be produced advantageously.

A composite material using the nonwoven fabric of the present invention or a crushed material thereof contains the nonwoven fabric or crushed material in a matrix material. As the matrix material, an organic polymer, an inorganic compound or a metal compound is used, for example.

The organic polymer may be a natural resin or a synthetic resin. It is preferably a synthetic resin such as a thermosetting resin or a thermoplastic resin. In particular, when the organic polymer is a thermoplastic resin, a molded article obtained has excellent impact strength and press molding or injection molding with high molding efficiency is possible advantageously.

Illustrative examples of the thermoplastic resin include an acrylonitrile-butadiene-styrene resin (ABS resin), an acrylonitrile-ethylene/propylene-styrene resin (AES resin), a methyl methacrylate-butadiene-styrene resin (MBS resin), an acrylonitrile-butadiene-methyl methacrylate-styrene resin (ABMS resin), an acrylonitrile-n-butyl acrylate-styrene resin (AAS resin), a rubber modified polystyrene (high impact polystyrene), polyolefin resins such as polyethylene resins and polypropylene resins, polystyrene resins, polymethyl methacrylate resins, polyvinyl chloride resins, cellulose acetate resins, polyamide resins, polyester resins, polyacrylonitrile resins, polycarbonate resins, polyether resins, polyphenylene resins, polyphenylene oxide resins, polyketone resins, polysulfone resins, polyphenylene sulfide resins, fluorine resins, silicon resins, polyimide resins, polybenzimidazole resins, thermoplastic elastomers such as a polyamide elastomer, their copolymers and modified forms, and resins obtained by blending two or more of these resins. Further, illustrative examples of the thermoplastic resin also include resins obtained by adding a softening component such as other elastomer, synthetic rubber or natural rubber to the above thermoplastic resins to improve impact resistance.

Meanwhile, illustrative examples of the thermosetting resin include unsaturated polyester resins, vinyl ester resins, phenol resins, urea resins, melamine resins, xylene resins, diallyl phthalate resins, epoxy resins, aniline resins, furan resins, polyurethane resins, thermosetting polyimides, their copolymers and modified forms, and resins obtained by blending two or more of these resins. Further, illustrative examples of the thermosetting resin also include resins obtained by adding a softening component such as other elastomer, synthetic rubber or natural rubber to the above thermosetting resins to improve impact resistance.

The inorganic compound as the matrix material comprises a ceramic material and a polymer inorganic oxide

such as glass. Preferred examples thereof include glass fibers, plate glass and glass in other forms, silicate ceramics and other fire-resistant ceramics, such as aluminum oxide, silicon carbide, silicon nitride and boron nitride. Further, the nonwoven fabric and/or crushed material thereof may be mixed into the inorganic compound by a method of mixing the nonwoven fabric and/or crushed material thereof into the molten inorganic compound by melt-kneading or a method comprising mixing the nonwoven fabric and/or crushed material thereof into a thermoplastic resin such as polycarbomethylsilane used as a matrix material and infusibilizing and firing the mixture to prepare a composite material of an inorganic compound such as silicon carbide.

Illustrative examples of metal as the matrix include aluminum, magnesium, lead, copper, tungsten, titanium, niobium, hafnium, vanadium, and their alloys and mixtures.

The amount of the nonwoven fabric and/or crushed material thereof contained in the composite material of the present invention is 0.01 to 100 parts by weight, preferably 0.1 to 60 parts by weight, more preferably 1 to 10 parts by weight, based on 100 parts by weight of the matrix material. When the amount of the carbon fibers is smaller than 0.01 parts by weight, an effect of an improvement in mechanical properties is hardly observed, while when it is larger than 100 parts by weight, processing such as spinning becomes difficult.

To produce the composite material of the present invention, there can be used a known method such as a method comprising dry-blending or wet-blending the resin in a pellet or powder form with a predetermined amount of the nonwoven fabric comprising carbon fibers and/or crushed material thereof and then either feeding the blend into a roll-type kneader and kneading the blend under heating or charging the blend into an extruder, extruding the blend into a rope shape and cutting the rope into pellets or a method comprising blending a solution or dispersion of the resin or the like with the carbon fibers in a liquid medium. Further, they can be blended by a wet master batch method. In the case of the thermosetting resin, the nonwoven fabric of the carbon fibers may be blended into the precursor, and a known method suited for various resins may be used.

Alternatively, it is also possible that the nonwoven fabric and/or crushed material are/is dispersed and blended into the raw material during production of the resin and the composite material of the present invention is produced by a conventionally known polymerization method such as a solution polymerization method, interfacial polymerization method or melt polymerization method.

Further, as a method of molding the composite material into a desired form, various molding methods such as injection molding (e.g. injection compression molding, gas assisted injection molding, insert molding), blow molding, vacuum molding, rotational molding, extrusion, press molding, transfer molding (e.g. RTM molding, RIM molding, SCRIMP molding or RFI molding), and autoclave molding can be employed. A particularly desirable molding method is injection molding because it has high productivity.

Illustrative examples of the form of the composite material of the present invention include pellets, stampable sheets, prepregs, SMC and BMC. A particularly desirable form is pellets. The pellets can be generally obtained by melt-kneading or impregnating the carbon fibers with the matrix in an extruder and extruding and palletizing the blend. For example, as a method of producing composite fibers, a method comprising preparing a mixed solution comprising a resin composition and carbon fibers and spinning composite fibers from the mixed solution is named.

Further, the composite material of the present invention can be foamed and formed into a foam by use of a foaming agent. For example, it can be formed into a resin foam having electroconductivity and/or a jet black property. In the foam, the above various resins and elastomers can be used. Illustrative examples of preferred polymers of the resins and elastomers include thermoplastic resins and thermoplastic elastomers such as polyethylene, polypropylene, polyvinyl chloride, polystyrene, polybutadiene, polyurethane and an ethylene-vinyl acetate copolymer. As the foaming agent, various foaming agents for resins, organic solvents, gases such as butane, and supercritical fluids such as supercritical carbon dioxide can be used.

Further, in the composite material of the present invention, a known filler can be added to impart effects according to applications of the composite material of the present invention, such as control of mechanical characteristic (e.g. a flexural modulus or impact strength), thermal properties (e.g. a thermal expansion coefficient and thermal conductivity), molding processability (e.g. engagement with screws, viscosity, the degree of filling, molding shrinkage, burr, sink mark and surface smoothness), specific gravity and anisotropy and cost reduction.

As the filler, mica, talc, kaolin, sericite, bentonite, xonotlite, sepiolite, smectite, montmorillonite, silica, calcium carbonate, carbon fibers, metal-coated carbon fibers, carbon powder, graphite powder, glass fibers, metal-coated glass fibers, glass beads, glass flakes, glass microballoons, clay, molybdenum disulfide, titanium oxide, zinc oxide, antimony oxide, calcium polyphosphate, barium sulfate, magnesium sulfate, zinc borate, calcium borate, aluminum borate whiskers and potassium titanate whiskers can be used, for example. These fillers may be used alone or in admixture of two or more.

Further, to the above fillers, a surface treating agent can be added in advance to impart better mechanical properties. The surface treating agent is preferably water-soluble in terms of the working environment. Illustrative examples of the surface treating agent include silane, aluminate and titanate coupling agents, epoxy, urethane, ether, ester, amide, acryl, olefin, vinyl, styrene, silicon, fluorine, silicone and phenol resins, and a liquid crystal resin. An appropriate surface treating agent is selected according to a matrix used.

The composite material of the present invention can contain, as other components, one or more of any additives such as an electroconductivity imparting agent, flame retardant, flame retardant aid, pigment, dye, lubricant, mold releasing agent, compatibility accelerator, dispersant, crystal nucleus agent, plasticizer, thermal stabilizer, antioxidant, coloration inhibitor, ultraviolet absorber, flowability modifier, foaming agent, antimicrobial agent, vibration deadener, deodorant, slidability modifier and antistatic agent, according to its application purpose.

Further, the metal-carrying nonwoven fabric of the present invention or metal-carrying crushed material thereof is formed by having a metal compound carried on the carbon fibers of the nonwoven fabric of the present invention having a carbon fiber diameter of 0.001 to 2 μm or crushed material thereof.

Metal to be carried is preferably metal with a catalytic function typified by Pt, Rh, Pd, Ir, Au and Ag. The metal to be carried is preferably a photocatalytic component in an application as an environment cleaning filter. Metal oxides such as $TiO_2$, ZnO, $WO_3$, $SnO_2$, $Fe_2O_3$, $SiO_2$, NiO, $Cu_2O$, $SrTiO_3$ and $NbO_2$ or metal sulfides such as CdS and ZnS are preferred.

These are components with high photocatalytic activity and have an advantage that they have very high adhesion to substrates. Further, in some cases, it is preferable to add noble metal such as Pt or Au and base metal such as Ni, Fe or Nb to the above metal oxide or metal sulfide as a cocatalyst. That is, the addition of the noble metal and base metal has an advantage that photocatalytic activity improves because the efficiency of charge separation of electrons and holes which are produced by photoexcitation is improved or a number of adsorption sites on the surface of a photocatalyst for a composite contamination component are provided.

The amount of the above metal to be carried is preferably 0.1 to 100 wt%, more preferably 1 to 50 wt%, based on the weight of the carbon fibers. When the amount of the metal is smaller than 0.1 wt%, catalytic activity is hardly developed disadvantageously, while when it is larger than 100 wt%, costs are increased, and the amount of the catalyst with respect to the surface area of the fibers becomes excessive, so that a portion of the metal does not function as an active spot disadvantageously.

Further, the carried metal is preferably in the form of a thin film having a film thickness of 1 to 100 nm or fine particles having a particle diameter of 1 to 100 nm, more preferably 10 to 50 nm. When the film thickness or particle diameter is smaller than 1 nm, the size of the metal becomes closer to the size of atoms, so that it becomes difficult to obtain its catalytic function and it becomes technically difficult to carry the metal on the fibers disadvantageously. Meanwhile, when the film thickness or particle diameter is larger than 100 nm, the large specific surface area of the superfine fibers cannot be used effectively, and it is hardly reflected on the functionality of a product which shows the effect of the superfine fibers disadvantageously.

As a method of carrying the catalyst, any known metal carrying method such as a wet method comprising dipping the nonwoven fabric in a metal compound solution such as metal alkoxide, metal chloride or metal sulfate, a dip coating method comprising dipping the nonwoven fabric in a dispersion having the metal dispersed in water or an organic solvent solution, a sizing method comprising mixing the metal into a pasty substance such as a sizing agent or a method based on chemical vapor deposition (CVD) can be used. In order to maximize effective use of the large specific surface area of the nonwoven fabric, it is essential to uniformly carry the metal in the state of a thin film or fine particles as described above. To that end, it is preferable to carry the metal by use of a supercritical fluid.

This is achieved by dissolving a metal compound in the supercritical fluid, immersing the nonwoven fabric in the precursor fluid, and releasing the supercritical state to deposit metal on the nonwoven fabric. The above supercritical fluid refers to a substance in a state beyond the critical temperature and the critical pressure. Since the fluid in this state has a dissolving capability comparable to that of liquid and diffusibility and viscosity comparable to those of gas, it can carry metal onto the surfaces of the fibers easily and quickly. Further, since the supercritical fluid has characteristics close to those of an organic solvent, metal can be carried on the surfaces of the fibers efficiently by use of the characteristics, when carbon microfibers having strong hydrophobicity and a strong affinity for an organic solvent are used.

Illustrative examples of the supercritical fluid having a metal dissolving capability include carbon dioxide, nitrous oxide, ethane, ethylene, methanol, and ethanol. Since carbon dioxide shows a low critical pressure of 7.48 MPa and a low critical temperature of 31.1°C, the supercritical state is acquired easily. Further, it is the least expensive next to water, is easy to handle since it is nontoxic, flame retardant and noncorrosive and imposes little burden on the environment. For these reasons, carbon dioxide is preferred.

The dissolving capability of the above supercritical fluid can be adjusted by temperature, pressure, addition of an entrainer and the like. By adjusting the dissolving capability and the amount of the metal precursor and the mobility and diffusibility of the supercritical fluid, the amount, film thickness, particle diameter, degree of dispersion and the like of metal carried on the fibers can be controlled.

The pressure is preferably equal to or higher than the critical pressure of 7.48 MPa and is particularly preferably 8.0 to 30.0 MPa. When the pressure exceeds this value, an industrially large amount of energy costs is required, and considerable burdens are imposed on safety and economical aspects disadvantageously. Further, the temperature is preferably equal to or higher than the critical temperature of 31.3°C and is particularly preferably 35°C to 150°C. When the temperature exceeds the above temperature, the density of the supercritical fluid is lowered and the solubility of

metal compound is significantly lowered disadvantageously.

Further, it is also possible to use a subcritical carbon dioxide fluid which is a carbon dioxide fluid under a subcritical condition, i.e. a condition in the vicinity of the critical point. In the present invention, the subcritical carbon dioxide fluid refers to a carbon dioxide fluid which is not in a supercritical state and has a pressure of 7.0 MPa or higher and a temperature of 25°C or higher.

As the above entrainer for promoting dissolution of the metal compound into the supercritical fluid, alcohols such as methanol, ethanol and propanol, ketones such as acetone and ethyl methyl ketone, and aromatic hydrocarbons such as benzene, toluene and xylene can be used. These are preferably added in an amount of 1 to 10 wt% based on the supercritical fluid. When the amount thereof exceeds the above range, the dissolution promoting effect as the entrainer deteriorates disadvantageously.

When a supercritical method is used as the metal carrying method, any metal compound which can be dissolved in the above supercritical fluid can be used. Inter alia, an organic metal compound is preferred, and a metal acetylacetonate or metal alkoxide is particularly preferred because they show high solubility in the supercritical fluid. Specific examples thereof include acetylacetonates such as platinum acetylacetonate, palladium acetylacetonate, rhodium acetylacetonate and iridium acetylacetonate, bisacetate triphenyl phosphate palladium, and palladium acetate. Further, metal in an application as an environment cleaning filter is preferably a photocatalytic component. In this case, alkoxides such as titanium isopropoxide, titanium n-butoxide, tetra-n-propyl orthotitanate, tetraethyl orthotitanate, triethoxy iron, pentaisopropoxy niobium, tetraethoxysilane, diethoxy zinc, tungsten ethoxide and diisopropoxy copper, tungsten hexacarbonyl, tetraphenyl tin, copper n-octanoate or the like can be used.

Further, it is also preferable to add noble metal such as Pt or Au and base metal such as Ni, Fe or Nb to the above photocatalytic component as a cocatalyst. This can be carried out by dissolving the photocatalyst component material and the cocatalyst component material in the supercritical fluid and contacting the solution with the fibers as described above to secure the photocatalyst component and the cocatalyst component to the fibers simultaneously or by securing either of the photocatalyst component material and the cocatalyst component material to the fibers, firing the fibers as described below to carry the catalyst, and securing the remaining material.

The firing is carried out for securing the above catalyst component carried by the supercritical method on the fibers. The metal carried by contacting the fibers may take the form of an acetylacetonate which is a raw material or the form of a hydroxide resulting from hydrolysis of alkoxide, and these are not only turned into a final catalyst or cocatalyst component but also strongly carried on the fibers by the firing step. Conditions for the firing, such as temperature and an atmosphere, can be selected as appropriate according to catalyst components and use of catalysts. The firing is generally carried out at 300 to 800°C in an oxidizing or inert atmosphere.

A filter using the thus obtained metal-carrying nonwoven fabric of the present invention or crushed material thereof as a substrate has a very large specific surface area, shows low energy loss since it has a large light receiving area for receiving sunlight or artificial light irradiated from a fluorescent lamp, incandescent lamp, black-light lamp, UV lamp, mercury lamp, xenon lamp, halogen lamp, metal halide lamp or the like, and can decompose and remove malodor, harmful substances in the atmosphere such as $NO_x$ or environmental pollutants such as organic solvents dissolved in water and pesticides quickly and continuously by contacting them efficiently. Further, since the filter is also excellent in safety, water resistance, heat resistance, light resistance and stability, it can be used at low cost and in an energy-saving and maintenance-free manner. Such a filter is suitably used as a water or air cleaning filter as described above.

Examples

Hereinafter, examples of the present invention will be described. The present invention shall not be limited by the following descriptions in any way.

(1) The dispersed particle diameter of a thermoplastic carbon precursor in a thermoplastic resin and the fiber diameter of carbon fibers constituting a nonwoven fabric were measured by a scanning electron microscope S-2400 (product of Hitachi, Ltd.)

(2) To obtain the water contact angle of a nonwoven fabric, photographs were taken by use of CA-S micron type-2 of KYOWA INTERFACE SCIENCE CO., LTD. at an ambient temperature of 20°C and a relative humidity RH of 65 to 70% in accordance with a drop method (volume of a drop: 3 $mm^2$), and six water contact angles measured based on the relationship $\theta/2 = \tan^{-1}(h/r)$ were averaged to give the water contact angle [θ]. θ/2, h and r indicate the values shown in Fig. 1. In Fig. 1, L indicates a drop (liquid), S indicates a sample (solid) whose water contact angle is measured, h indicates the maximum height of the drop, r indicates the radius of the circular contact area between the drop and the sample, θ/2 indicates an angle on the sample contacting side of a right-angled isosceles triangle having r as its base and h as its height, and θ indicates a water contact angle (double of θ/2).

(3) Wide-Angle X-Ray Measurement of Carbon Fibers:

RU-300 of RIGAKU DENKI CO., LTD. was used. The distance ($d_{002}$) between net planes was determined from the value of 2θ, and the thickness (Lc) of the net planes was determined from the half value width of a peak.

(4) Mechanical Properties of Fibers:

A tensile test was conducted on an obtained fiber by use of TENSILON universal tester 1225A of ORIENTEC CO. , LTD. to determine an elastic modulus and strength.

(5) The porosity and pore diameter of a nonwoven fabric were measured by use of PORESIZER 9320 of MICROMERITECHS CO., LTD. at a measurement pressure of 100 kPa to 207 MPa and 27°C. The porosity and pore diameter of the nonwoven fabric were evaluated by use of the following formulae.

$$\text{Pore Diameter (rAV)} = 4Vp/Sp$$

$$\text{Porosity (P)} = Vp \times W \times 100/V$$

Vp indicates a pore volume (cc/g), i.e. a cumulative pore volume of measured pores, Sp indicates a pore specific surface area ($m^2/g$), i.e. a cumulative specific surface area determined from the pore volume and the pore radius assuming that it is cylindrical, W indicates the mass of the nonwoven fabric, and V indicates the volume of the sample. 130° was used as the contact angle of mercury, and 484 mN/m was used as surface tension.

Example 1

100 parts by weight of poly-4-methylpentene-1 (TPX: GRADE RT-18 of Mitsui Chemicals, Inc.) as a thermoplastic resin and 11.1 parts by weight of mesophase pitch AR-HP (product of Mitsubishi Gas Chemical Co. , Inc.) as a thermoplastic carbon precursor were melt-kneaded by a unidirectional twin-screw extruder (TEX-30 of Japan Steel Works, Ltd., barrel temperature: 290°C, under a stream of nitrogen) to prepare a mixture. The dispersion diameter of the thermoplastic carbon precursor in the thermoplastic resin in the mixture obtained under the above conditions was 0.05 to 2 μm. Further, as a result of keeping this mixture at 300°C for 10 minutes, agglomeration of the thermoplastic carbon precursor was not seen, and the dispersion diameter was 0.05 to 2 μm.

Then, the above mixture was melt-blown into a nonwoven fabric. More specifically, the mixture was discharged from a discharge nozzle at 330°C, and air under condition of 350°C and 500 m/min was blown against the molten fiber right underneath the discharge nozzle to prepare the nonwoven fabric comprising an aggregate of precursor fibers having a fiber diameter of 0.5 to 5 μm.

The nonwoven fabric comprising precursor fibers and iodine were charged into a 1-liter pressure-resistant glass together with air so that 0.5 parts by weight of iodine was contained based on 10 parts by weight of the nonwoven fabric, and they were kept at 180°C for 10 hours to have them undergo a stabilization treatment. Thereby, a nonwoven fabric comprising an aggregate of stabilized precursor fibers was prepared.

Then, the nonwoven fabric comprising stabilized precursor fibers was heated to 550°C at a temperature rising rate of 5°C/min in a nitrogen gas atmosphere to remove the thermoplastic resin, thereby preparing a nonwoven fabric comprising an aggregate of fibrous carbon precursors. The nonwoven fabric comprising fibrous carbon precursors was heated from room temperature to 1,000°C at a temperature rising rate of 10°C/min in a nitrogen gas atmosphere to prepare a nonwoven fabric comprising an aggregate of carbon fibers. The obtained nonwoven fabric had a carbon fiber diameter of about 100 to 300 nm and a thickness of about 30 μm.

Example 2

A nonwoven fabric comprising an aggregate of stabilized precursor fibers was prepared in the same manner as in Example 1.

Then, the nonwoven fabric comprising stabilized precursor fibers was heated to 550°C at a temperature rising rate of 5°C/min in a nitrogen gas atmosphere to remove the thermoplastic resin, thereby preparing a nonwoven fabric comprising fibrous carbon precursors. The nonwoven fabric comprising the fibrous carbon precursors was heated from room temperature to 2,800°C in 3 hours in an argon gas atmosphere to prepare a nonwoven fabric comprising an aggregate of carbon fibers. The nonwoven fabric had a density of the carbon fibers per unit area of 8 $g/m^2$. When the water contact angle of the nonwoven fabric was measured at 20°C and a relative humidity RH of 67%, it was 148.9°.

The obtained carbon fiber diameter (D) was about 100 to 600 nm, the carbon fiber length (L) was at least 100 μm, and L/D was confirmed to be larger than 30. Further, the porosity evaluated by a mercury porosimeter was 94%, and the pore diameter was 4.2 μm.

Comparative Example 1

A knitted fabric was prepared by use of carbon fibers having a fiber diameter of 10 μm of TOHO TENAX Co., Ltd. and graphitized at 2,800°C. When the water contact angle of the graphitized knitted fabric was measured at 20°C and a relative humidity RH of 67%, it was 134.7°.

Comparative Example 2

Mesophase pitch AR-HP (product of Mitsubishi Gas Chemical Co., Inc.) was discharged from a discharge nozzle at 330°C, and air under condition of 350°C and 500 m/min was blown against the molten fiber right underneath the discharge nozzle to prepare a nonwoven fabric having a fiber diameter of 2 to 10 μm. The nonwoven fabric and iodine were charged into a 1-liter pressure-resistant glass together with air so that 0.5 parts by weight of iodine was contained based on 10 parts by weight of the nonwoven fabric. They were kept at 180°C for 20 hours to undergo a stabilization treatment and then heated from room temperature to 2,800°C in 3 hours to prepare a nonwoven fabric comprising carbon fibers. The diameter of the carbon fibers was about 2 to 8 μm. The porosity evaluated by a mercury porosimeter was 79%, and the pore diameter was 46.4 μm.

Example 3

100 parts by weight of poly-4-methylpentene-1 (TPX: GRADE RT-18 of Mitsui Chemicals, Inc.) as a thermoplastic resin and 11.1 parts by weight of mesophase pitch AR-HP (product of Mitsubishi Gas Chemical Co., Inc.) as a thermoplastic carbon precursor were melt-kneaded by a unidirectional twin-screw extruder (TEX-30 of Japan Steel Works, Ltd., barrel temperature: 290°C, under a stream of nitrogen) to prepare a resin composition. The dispersion diameter of the thermoplastic carbon precursor in the thermoplastic resin in the resin composition obtained under the above conditions was 0.05 to 2 μm. Further, as a result of keeping the resin composition at 300°C for 10 minutes, agglomeration of the thermoplastic carbon precursor was not observed, and the dispersion diameter was 0.05 to 2 μm.

The above resin composition was spun from a spinneret at 300°C to prepare an aggregate of precursor composite fibers (sea-island type composite fibers containing carbon fiber precursors as island components). The fiber diameter of the composite fibers was 20 μm, and the dispersion diameters at a cross section of the mesophase pitch were all 2 μm or smaller. Then, the aggregate of the precursor composite fibers was kept in the air at 200°C for 20 hours to obtain an aggregate of stabilized precursor composite fibers.

Then, the aggregate of stabilized precursor composite fibers was heated to 450°C at a temperature rising rate of 5°C/min and kept at 450°C for 5 hours in a nitrogen gas atmosphere to remove the thermoplastic resin, thereby forming an aggregate of fibrous carbon precursors. The aggregate of fibrous carbon precursors was heated from 30°C to 1,000°C at a temperature rising rate of 2°C/min in a nitrogen atmosphere to obtain an aggregate of carbon fibers.

The aggregate of carbon fibers was heated to 2,700°C at a temperature rising rate of 20°C/min in an argon gas atmosphere to carry out graphitization. As a result of wide-angle X-ray measurement of the graphitized carbon fibers, the distance ($d_{002}$) between net planes of the graphite layer was 0.338 nm, and the thickness (Lc) of the net planes was 12.0 nm.

Reference Example 1 Preparation of Aramid Resin Solution:

To a fully dried three-neck flask equipped with an agitator, 2,152 g of dehydration-purified NMP, 27.04 g p-phenylene diamine and 50.06 g of 3,4'-diaminodiphenyl ether were added at room temperature. After they were dissolved in nitrogen, 101.51 g of terephthalic dichloride was added while the mixture was ice-cooled under agitation. Then, the resulting mixture was gradually heated and eventually allowed to react at 80°C for 60 minutes. Then, 37.04 g of calcium hydroxide was added to conduct a neutralization reaction, thereby obtaining an NMP aramid resin solution. The intrinsic viscosity measured at 30°C of a concentrated sulfuric acid solution having an aramid resin concentration of 0.5 g/100 mL obtained by reprecipitating the obtained dope in water was 3.5 dL/g.

Example 4

0.15 g of the carbon fibers synthesized in Example 3 were added to 50 g of NMP and treated with ultrasound having an oscillation frequency of 38 kHz for 16 hours. To this NMP dispersion, 247.5 g of the NMP aramid resin solution

prepared in Reference Example 1 was added, and the mixture was agitated at 80°C for 4 hours to obtain a mixed dope having an aramid resin/carbon fibers ratio of 99/1 (weight ratio). The thus obtained polymer dope was extruded into a coagulation bath of 50°C which was an aqueous solution containing 30 wt% of NMP at a cylinder temperature of 50°C and a rate of 3 m/min by use of a cap having 5 holes each having a diameter of 0.3 mm and an L/D of 1. The distance between the surface of the cap and the surface of the coagulation bath was 10 mm. Fibers taken out of the coagulation bath were rinsed in a water bath of 50°C, dried by a drying roller of 120°C, and then drawn on a hot plate of 500°C. Prior to this, the maximum draw ratio (MDR) in this drawing step was determined. The fibers were actually drawn at 80% (15.2 times, rate: 60.9 m/min) of the MDR. Thereby, composite fibers were obtained. As a result of a tensile test, the elastic modulus was 83.0 GPa, and the strength was 28.4 cN/dtex.

Example 5

A nonwoven fabric comprising an aggregate of carbon fibers (carbon fiber diameter: 100 to 500 nm) was prepared in the same manner as in Example 2.

Then, this nonwoven fabric (the carbon microfiber filter) and an isopropanol solution containing 10 wt% of titanium isopropoxide were charged into a 100-ml pressure-resistant container and kept in 25 MPa of supercritical carbon dioxide at 100°C for 2 hours to impregnate the carbon microfiber filter with a supercritical carbon dioxide fluid having titanium isopropoxide dissolved therein. Then, it was hydrolyzed with water in the atmosphere under reduced pressure to cause amorphous titanium oxide to be carried on the fibers. Then, the filter was fired at 500°C in a nitrogen atmosphere for 1 hour to obtain an anatase-type titanium oxide carrying filter. The amount, thickness and particle diameter of titanium oxide carried on the obtained titanium oxide carrying superfine filter was 7 wt%, 20 to 50 nm, and 50 to 100 nm, respectively.

Comparative Example 3

A polyacrylonitrile flame-resistant nonwoven fabric having a fiber diameter of 10 μm was heated from room temperature to 2,800°C in 3 hours in an argon gas atmosphere as in Example 5 to obtain a graphitized carbon fiber filter. Titanium oxide was carried on the carbon fiber filter in the same manner as in Example 5. The amount, thickness and particle diameter of titanium oxide carried on the obtained titanium oxide carrying filter was 13 wt%, 50 to 200 nm, and 200 nm to 1 μm, respectively.

Evaluation of Catalytic Functions:

The catalytic functions of the above prepared carbon fiber filters of Example 5 and Comparative Example 3 were compared. That is, 20 ppm of trichloroethylene (TCE) was injected into Tedlar bags containing the above carbon fiber filters, the bags were then irradiated with ultraviolet radiation having an intensity of 20 mW/cm$^2$ for 30 minutes, and changes in the trichloroethylene concentration were examined by use of gas detecting tubes. The results are shown in Fig. 3 as the relationship between time and a trichloroethylene decomposition amount.

The above trichloroethylene decomposition amount is the amount of trichloroethylene in which titanium oxide per unit weight was decomposed.

It is understood from Fig. 3 that the trichloroethylene decomposition amount when the titanium oxide carrying superfine filter of Example 5 was used was significantly larger than the trichloroethylene decomposition amount when the titanium oxide carrying filter of Comparative Example 3 was used. Thus, the above results indicate that a highly functional environment cleaning filter having a large light receiving area and high catalyst reaction efficiency can be obtained by the present invention.

## Claims

1. A nonwoven fabric comprising an aggregate of carbon fibers having a fiber diameter of 0.001 to 2 μm.

2. The nonwoven fabric of claim 1, wherein the fiber diameter is 0.01 to 1 μm.

3. The nonwoven fabric of claim 1, wherein the fiber diameter is 0.05 to 0.5 μm.

4. The nonwoven fabric of claim 1, having a density of the carbon fibers per unit area of 1 to 1,000 g/m$^2$.

5. The nonwoven fabric of claim 1, having a density of the carbon fibers per unit area of 2 to 500 g/m$^2$ ·

6. The nonwoven fabric of claim 1, having a porosity of 60 to 98%.

7. The nonwoven fabric of claim 1, having a porosity of 80 to 98%.

8. The nonwoven fabric of claim 1, having a porosity of 90 to 98%.

9. The nonwoven fabric of claim 1, having a water contact angle of 140 to 155° at 20°C and a relative humidity of 65 to 70%.

10. The nonwoven fabric of claim 1, having a thickness of 5 μm to 2 cm.

11. The nonwoven fabric of claim 1, having a thickness of 5 μm to 1 mm.

12. The nonwoven fabric of claim 1 , wherein the carbon fibers do not have a branch structure.

13. The nonwoven fabric of claim 1, wherein the carbon fibers are porous.

14. The nonwoven fabric of claim 1, wherein the carbon fibers satisfy the following formula (1):

$$30 < L/D \qquad (1)$$

wherein L is the fiber length (μm) of the carbon fibers and D is the fiber diameter (μm) of the carbon fibers.

15. A substrate for fuel cell electrodes which comprises the nonwoven fabric of claim 1 or a pulverized material thereof.

16. A precursor for fuel cell electrodes which comprises the nonwoven fabric of claim 1 and in which a catalyst comprising carbon powder that carries platinum or a platinum alloy is bound by use of polytetrafluoroethylene as a binder.

17. The precursor of claim 16, wherein the carbon powder is a material obtained from pulverizing the nonwoven fabric of claim 1.

18. A precursor for fuel cell electrodes which comprises the nonwoven fabric of claim 1 and in which a catalyst comprising platinum or a platinum alloy is bound by use of polytetrafluoroethylene as a binder.

19. A precursor for fuel cell electrodes which comprises a carbon fiber fabric in which a catalyst comprising a pulverized material of the nonwoven fabric of claim 1 carrying platinum or a platinum alloy, is bound by use of polytetrafluoroethylene as a binder.

20. An electrode material comprising a pulverized material of the nonwoven fabric of claim 1.

21. The electrode material of claim 20 which is used for a secondary cell.

22. The electrode material of claim 20 which is used for a capantor.

23. An electrode material comprising the nonwoven fabric of claim 13 or a pulverized material thereof.

24. The electrode material of claim 23 which is used for a capantor.

25. The electrode material of claim 23, wherein the porous carbon fibers constituting the nonwoven fabric of claim 13 have fine pores having a fine pore diameter of 0.1 to 200 nm on the surfaces thereof.

26. The electrode material of claim 24, wherein the ratio of the specific surface area of fine pores having a fine pore diameter of 2 nm or larger to the total specific surface area is 0.3 or higher.

27. The electrode material of claim 26, wherein the total specific surface area is 100 to 50,000 $m^2/g$.

**28.** A composite material comprising a matrix material and the nonwoven fabric of claim 1 or a pulverized material thereof which is contained in the matrix material.

**29.** The composite material of claim 28, wherein the matrix material is an organic polymer or an inorganic compound.

**30.** The composite material of claim 29, wherein the organic polymer is selected from the group consisting of polyolefin polyamide, polyester, polycarbonate, polyimide, polyether, polyphenylene, polysulfone, polyurethane and an epoxy resin.

**31.** The composite material of claim 29, wherein the inorganic compound is selected from the group consisting of aluminum oxide, silicon carbide, silicon nitride, boron nitride and inorganic glass.

**32.** A metal-carrying nonwoven fabric or metal-carrying pulverized material which comprises 100 parts by weight of the nonwoven fabric of claim 3 or a pulverized material thereof and 0.1 to 100 parts by weight of metal compound carried on the carbon fibers which constitute the nonwoven fabric or pulverized material thereof.

**33.** The metal-carrying nonwoven fabric or metal-carrying pulverized material of claim 32, wherein the metal compound is a photocatalyst.

**34.** The metal-carrying nonwoven fabric or metal-carrying pulverized material of claim 32, wherein the form of the metal compound carried is a thin film having a film thickness of 1 to 100 nm or particles having a particle size of 1 to 100 nm.

**35.** A filter substrate comprising the metal-carrying nonwoven fabric or metal-carrying pulverized material of claim 32.

**36.** A water treatment or air cleaning filter comprising the filter substrate of claim 35.

**37.** A method for producing a nonwoven fabric comprising an aggregate of carbon fibers, comprising:

(1) a step of forming an aggregate of precursor fibers from a mixture comprising 100 parts by weight of thermoplastic resin and 1 to 150 parts by weight of at least one thermoplastic carbon precursor selected from the group consisting of pitch, polyacrylonitrile, polycarbodiimide, polyimide, polybenzoazol and aramid, in accordance with a melt blow method,
(2) a step of forming an aggregate of stabilized precursor fibers by subjecting the above aggregate of precursor fibers to a stabilization treatment to stabilize the thermoplastic carbon precursor in the precursor fibers,
(3) a step of forming an aggregate of fibrous carbon precursor by removing the thermoplastic resin from the aggregate of stabilized precursor fibers, and
(4) a step of carbonizing or graphitizing the aggregate of fibrous carbon precursor.

**38.** The method of claim 37, wherein the fiber diameter of the precursor fibers formed in the step (1) is 0.01 to 20 $\mu$m.

**39.** The method of claim 37, wherein the fiber diameter of the precursor fibers formed in the step (1) is 0.05 to 10 $\mu$m.

**40.** The method of claim 37, wherein in the step (2), the stabilization treatment is carried out in a halogen/oxygen mixed gas.

**41.** The method of claim 40, wherein iodine is used as the halogen gas.

**42.** The method of claim 37, wherein the pitch is mesophase pitch.

**43.** The method of claim 37, wherein the thermoplastic resin is a thermoplastic resin represented by the following formula (I):

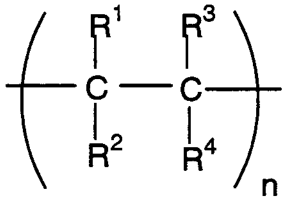

(I)

wherein $R^1$, $R^2$, $R^3$ and $R^4$ are each independently selected from the group consisting of a hydrogen atom, an alkyl group having 1 to 15 carbon atoms, a cycloalkyl group having 5 to 10 carbon atoms, an aryl group having 6 to 12 carbon atoms and an aralkyl group having 6 to 12 carbon atoms, and n represents an integer of 20 or larger.

**44.** The method of claim 43, wherein the thermoplastic resin is poly-4-methylpentene-1 or a copolymer thereof.

**45.** The method of claim 43, wherein the thermoplastic resin is a polyethylene.

**46.** The method of claim 37, wherein after the step (4), (5) a step of firing the fibrous carbon precursor at 1,500°C or lower and then subjecting the fired precursor to an activation treatment is further carried out to produce porous carbon fibers.

**47.** The method of claim 46, wherein the activation treatment is a treatment with water vapor and/or metal hydroxide.

Fig. 1

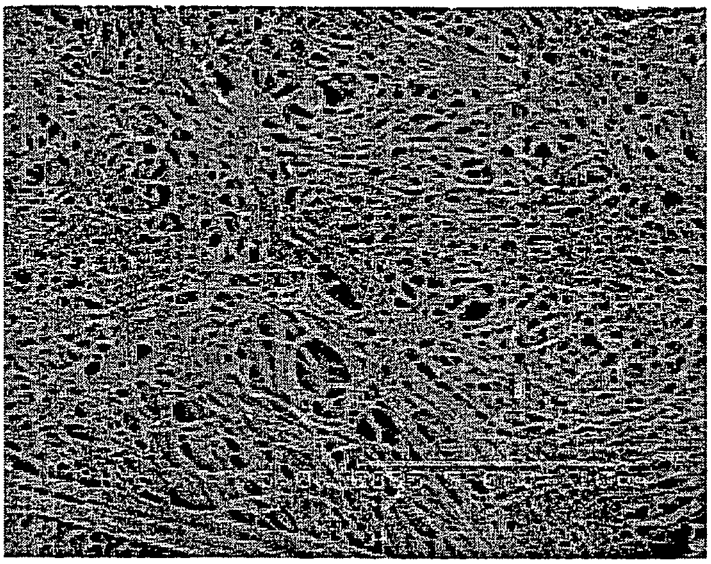

Fig. 2

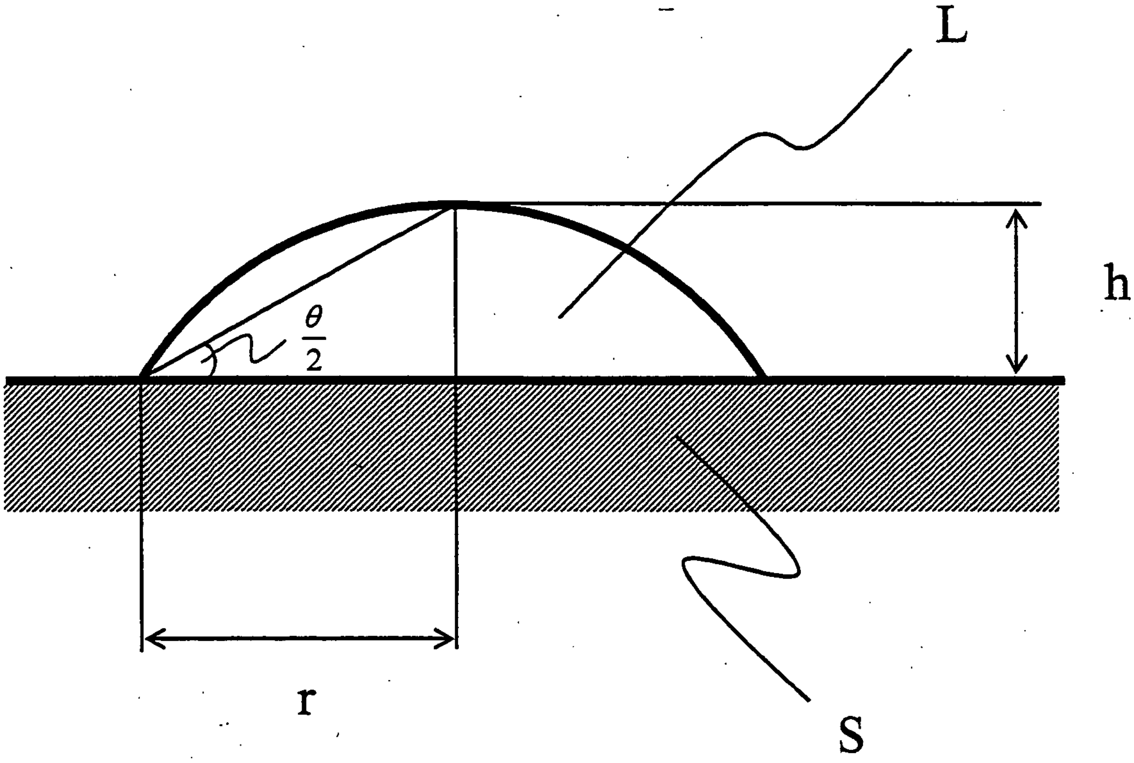
L
h
θ
2
r
S

Fig. 3

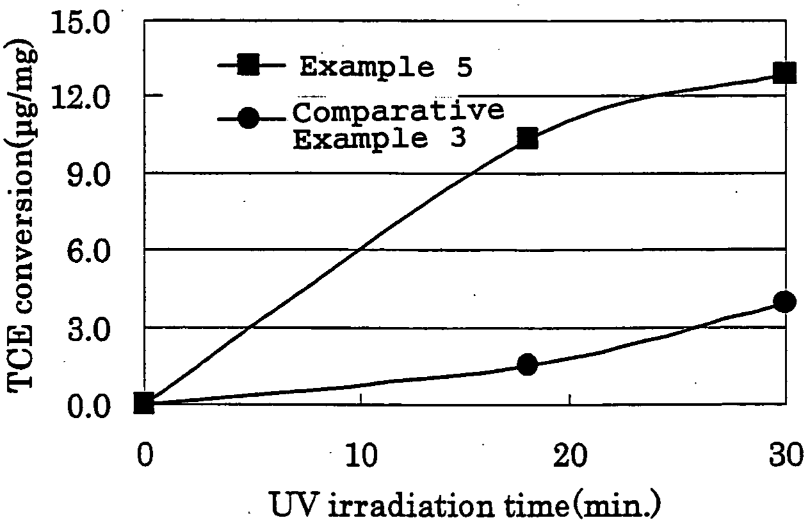
15.0
12.0
9.0
6.0
3.0
0.0
TCE conversion(μg/mg)
Example 5
Comparative
Example 3
0
10
20
30
UV irradiation time(min.)

## INTERNATIONAL SEARCH REPORT

International application No.
PCT/JP2004/016915

A. CLASSIFICATION OF SUBJECT MATTER
Int.Cl[7] D04H3/00

According to International Patent Classification (IPC) or to both national classification and IPC

B. FIELDS SEARCHED

Minimum documentation searched (classification system followed by classification symbols)
Int.Cl[7] D04H, D01F9/00-9/32

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)
WPIL, JOIS

C. DOCUMENTS CONSIDERED TO BE RELEVANT

| Category* | Citation of document, with indication, where appropriate, of the relevant passages | Relevant to claim No. |
|---|---|---|
| X<br>Y | JP 1-282325 A (Toray Industries, Inc.), 14 November, 1989 (14.11.89), Claims; examples (Family: none) | 1-14,28-31<br>15-27,32-47 |
| X<br>Y | JP 2002-285457 A (Osaka Gas Co., Ltd.), 03 October, 2002 (03.10.02), Claims; Par. No. [0028]; examples (Family: none) | 1-14,28-31<br>15-27,32-47 |
| X<br>Y | WO 98/38140 A (Osaka Gas Co., Ltd.), 03 September, 1998 (30.09.98), Page 16; examples; Claims & EP 963964 A | 1-14,28-31<br>15-27,32-47 |

☒ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>02 February, 2005 (02.02.05) | Date of mailing of the international search report<br>01 March, 2005 (01.03.05) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2004/016915

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2646140 B (Petoca, Ltd.), 25 August, 1997 (25.08.97), Column 3, liens 11 to 15 & EP 428991 A | 15-27,32-36 |
| Y | JP 5-195396 A (Petoca, Ltd.), 03 August, 1993 (03.08.93), Par. No. [0001] & EP 543147 A & US 5283113 A | 15-27,32-36 |
| Y | Asao OYA, 'Preparation of thin carbon fibers from phenol-formaldehyde polymer micro-beads dispersed in polyethylene matrix', Carbon 38, (2000), pages 1141 to 1144 | 37-47 |
| A | JP 3-8811 A (Petoca, Ltd.), 16 January, 1991 (16.01.91), All references & EP 387829 A & US 5536486 A | 1-47 |
| A | JP 11-335930 A (Petoca, Ltd.), 07 December, 1999 (07.12.99), All references (Family: none) | 1-47 |
| P,A | JP 2004-176236 A (Teijin Ltd.), 24 June, 2004 (24.06.04), All references (Family: none) | 1-47 |

Form PCT/ISA/210 (continuation of second sheet) (January 2004)